**Europäisches Patentamt**

(19) **European Patent Office**

**Office européen des brevets**

(11) Veröffentlichungsnummer: **0 085 875**
**A2**

(12) **EUROPÄISCHE PATENTANMELDUNG**

(21) Anmeldenummer: **83100560.8**

(51) Int. Cl.³: **G 01 D 5/26**

(22) Anmeldetag: **22.01.83**

(30) Priorität: **02.02.82 SE 8200575**

(43) Veröffentlichungstag der Anmeldung:
**17.08.83 Patentblatt 83/33**

(84) Benannte Vertragsstaaten:
**CH DE FR GB LI**

(71) Anmelder: **ASEA AB**

**S-721 83 Västeras(SE)**

(72) Erfinder: **Brogardh, Torgny**
**Platverksgatan 140**
**S-724 74 Västeras(SE)**

(72) Erfinder: **Hök, Bertil, Dr. phil.**
**Sportfiskargatan 53**
**S-723 48 Västeras(SE)**

(72) Erfinder: **Ovrén, Christer, Dr. Ing.**
**Vilddjursvägen 9**
**S-722 43 Västeras(SE)**

(74) Vertreter: **Boecker, Joachim, Dr.-Ing.**
**Rathenauplatz 2-8**
**D-6000 Frankfurt a.M. 1(DE)**

(54) Faseroptische Messanordnung zur Messung physikalischer Grössen.

(57) Faseroptische Meßanordnung zum Messen physikalischer Größen, beispielsweise einer Lage, einer Geschwindigkeit, einer Beschleunigung, einer Kraft, eines Druckes, einer Dehnung oder einer Temperatur, mit mindestens einer optischen Faser (5) zum Leiten von Licht zwischen einer elektronischen Einheit (E) und einem Geber (G), wobei der Geber (G) mindestens ein lumineszierendes Element (15, 16, 18 usw.) enthält. Gemäß der Erfindung bestimmt die zu messende physikalische Größe die Lage eines im Geber forhandenen optischen Spektralfilters (38, 42), welches sich im größeren oder kleineren Maße zwischen der Endfläche der optischen Faser (5) und mindestens einem der lumineszierenden Elemente (15, 16) befindet. Der elektronische Teil (E) enthält mindestens zwei Lichtquellen (2, 31), die über die optische Faser (5) die lumineszierenden Elemente (15, 16) beleuchten. Das Lichttransmissionsspektrum des Spektralfilters (38) und das Lichtemissionsspektrum der Lichtquellen (2, 31) ist so gewählt, daß das genannte Spektralfilter das von der einen Lichtquelle erzeugte Licht in größerem Umfang durchläßt als das von der anderen Lichtquelle erzeugte Licht.

FIG. 3a

FIG. 3b

Patentanwalt und Rechtsanwalt
Dr.-Ing. Dipl.-Ing. Joachim B o e c k e r

—1—

6 Frankfurt/Main 1 0085875
Rathenauplatz 2-8
Telefon: (0611) *282355    B/d 21 230 PE
Telex: 4189066 itax d

<u>ASEA Aktiebolag</u>
<u>Västeras / Schweden</u>

<u>Faseroptische Meßanordnung zur Messung</u>
<u>physikalischer Größen</u>

Die Erfindung betrifft eine faseroptische Meßanordnung zur Messung physikalischer Größen gemäß dem Oberbegriff des Anspruches 1.

Beim Messen mechanischer Größen mit lumineszierenden Gebern ist es infolge der Wellenlängenverschiebung des Lumineszenzspektrums schwierig, eine hohe Genauigkeit des Gebers über große Temperaturbereiche zu erzielen.

Eine auf Lumineszenz basierende faseroptische Meßanordnung zum Messen mechanischer Größen ist aus der DE-OS 30 47 343 bekannt. Bei dieser Meßanordnung verursacht die zu messende mechanische Größe entsprechend ihrem sich ändernden Wert eine Veränderung der Lage eines lumineszierenden Materials relativ zu dem Ende einer in den Sensor eintretenden optischen Faser. Diese Sensorart hat gegenüber mechanischen Sensoren, die auf der Lageveränderung reflektierender Bauteile basieren, den Vorteil, daß im Sensor eine Wellenlängenänderung stattfindet, wodurch es möglich wird, im faseroptischen System reflektiertes Licht mittels optischer Filter an Lichemittern und/oder Lichtdetektoren ausscheiden zu können. Es hat sich jedoch gezeigt, daß die genannte lumineszenzabsorbierende Meßanordnung nicht benutzbar ist, wenn hohe Ansprüche an die Genauigkeit gestellt werden und der Sensor gleichzeitig großen Temperaturänderungen ausgesetzt.

/2

ist.

Der Erfindung liegt die Aufgabe zugrunde, eine Meßanordnung der eingangs genannten Art zu entwickeln, bei der eine hohe Genauigkeit auch erzielt werden kann, wenn der Sensor großen Temperaturänderungen ausgesetzt ist.

Zur Lösung dieser Aufgabe wird eine Meßanordnung nach dem Oberbegriff des Anspruches 1 vorgeschlagen, die erfindungsgemäß die im kennzeichnenden Teil des Anspruches 1 genannten Merkmale hat.

Vorteilhafte Weiterbildungen der Erfindung sind in den Unteransprüchen genannt.

Durch die Erfindung wird somit eine auf Lumineszenz basierende Meßanordnung geschaffen, die einerseits frei von den Nachteilen auf anderen Prinzipien basierender faseroptischer Meßanordnungen ist und andererseits in ihrer Meßgenauigkeit von Temperaturänderungen praktisch unabhängig ist. Anstelle der Messung von relativen Lichtintensitäten zweier nebeneinander angeordneter Lumineszenzelementen mit verschiedenen Lumineszenzspektren wird bei der Erfindung eine selektiv angeregte Lumineszenz mit identischen Lumineszenzspektren gemessen, wodurch die Temperaturabhängigkeit eleminiert wird.

Anhand der Figuren soll die Erfindung näher erläutert werden. Es zeigen

Fig. 1a eine bekannte faseroptische Meßanordnung,

Fig. 1b in vergrößerter Darstellung den Geber der Meßanordnung in Fig. 1a,

Fig. 2 Spektren von in Fig. 1 vorhandenen optischen Bauteilen,

Fig. 3a und 3 b in entsprechender Darstellung wie Fig. 1a und 1b ein Ausführungsbeispiel einer Meßan-

- 3 -

ordnung gemäß der Erfindung,

Fig. 4  Spektren von in Fig. 3 vorhandenen optischen Bauteilen,

Fig. 5 bis 9 verschiedene Ausführungsformen des Sensors für Meßanordnungen gemäß der Erfindung.

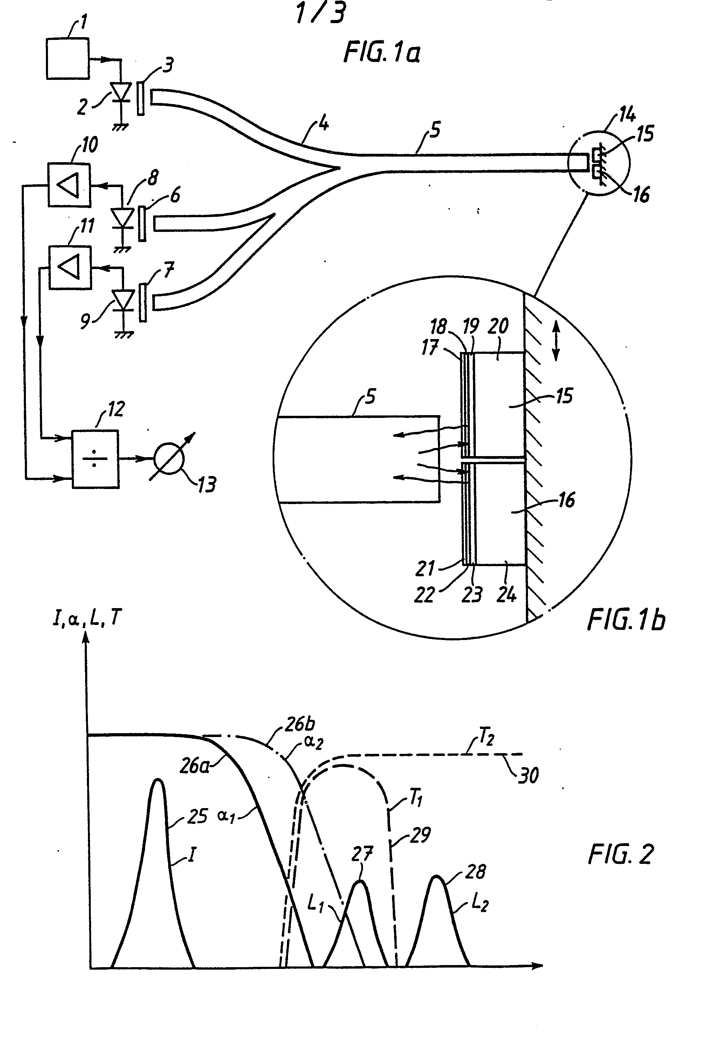

Fig. 1 zeigt eine von dem Speiseglied 1 gespeiste Leuchtdiode 2, deren emittiertes Licht nach dem Passieren eines Filters 3 zum Teil in die faseroptische Verzweigung 4 hineingeleitet wird und durch die optische Faser 5 zum Sensor 14 weitergeleitet wird. Im Sensor befinden sich zwei relativ zueinander feste Halbleiterelemente 15 und 16, die relativ zu der Endfläche der Faser 5 nach oben und unten oder auch auf andere Weise relativ zu dieser Endfläche verschiebbar sind. Dadurch, daß die Beschaffenheit des Materials der Halbleiterelemente 15 und 16 diesen verschiedene Lumineszenzspektren verleiht, verändert die Verschiebung der Halbleiterelemente die spektrale Zusammensetzung des Lichtes, das in die Faser 5 vom Sensor zurückgespeist wird. Dieses wird von Fotodioden 8 und 9 erfaßt, die mit verschiedenen optischen Filtern 6 und 7 versehen sind. Die Fotoströme der Fotodioden werden durch Verstärker 10 und 11 verstärkt, und in einem Quotientenbilder 12 wird der Quotient aus den beiden Fotoströmen gebildet, der durch ein Anzeigegerät 13 angezeigt werden kann. Der vom Anzeigegerät 13 angezeigte Meßwert ist ein Maß, das von der Lage der Halbleiterelemente 15, 16 abhängig ist, jedoch unabhängig ist von Variationen der Dämpfung des faseroptischen Systems und der Lichtemission der Leuchtdiode 2. Fig. 1b zeigt ein Beispiel für den Aufbau der Halbleiterelmente 15 und 16. Auf einem Halbleitersubstrat 20 bzw. 24 sind epitaktische Schichten 17, 18, 19 bzw. 21, 22, 23 aufgebracht. Die Lumineszenz wird in der inneren Schicht 18 bzw. 22 erzeugt, und indem man diesen Schichten unterschiedliche Bandabstände im Energiebänderschema verleiht, beispielsweise durch verschiedene Gehalte Al in einem GaAs-System, und/oder durch Dotierung mit unterschiedlichen Substanzen,

/4

beispielsweise mit Ge und Si in dem GaAs-System, sind die Lumineszenzspektren der Elemente 15 und 16 verschieden. Diese Strukturen für faseroptische Sensoren sind in der Patentliteratur bereits beschrieben (siehe z.B. die DE-OS 31 37 389 und die DE-OS 31 42 301).

Ein Beispiel für die spektralen Zusammenhänge des Systems nach Fig. 1 zeigt Figur 2, in der das Emissionsspektrum 25 der Leuchtdiode 2, die Absorptionsspektren 26a, 26 b der Schichten 18 und 22 der Elemente 15 und 16, das Lumineszenzspektrum 27 der Schicht 18, das Lumineszenzspektrum 28 der Schicht 22, das Transmissionsspektrum 29 des Filters 6 und das Transmissionsspektrum 20 des Filters 7 dargestellt sind. Bei großen Temperaturschwankungen im Sensor 14 werden die Lumineszenzspektren 27 und 28 wellenlängenmäßig verschoben, wodurch die Funktion des Filters mit dem Spektrum 29 hinsichtlich der Genauigkeit des Meßgerätes kritisch wird.

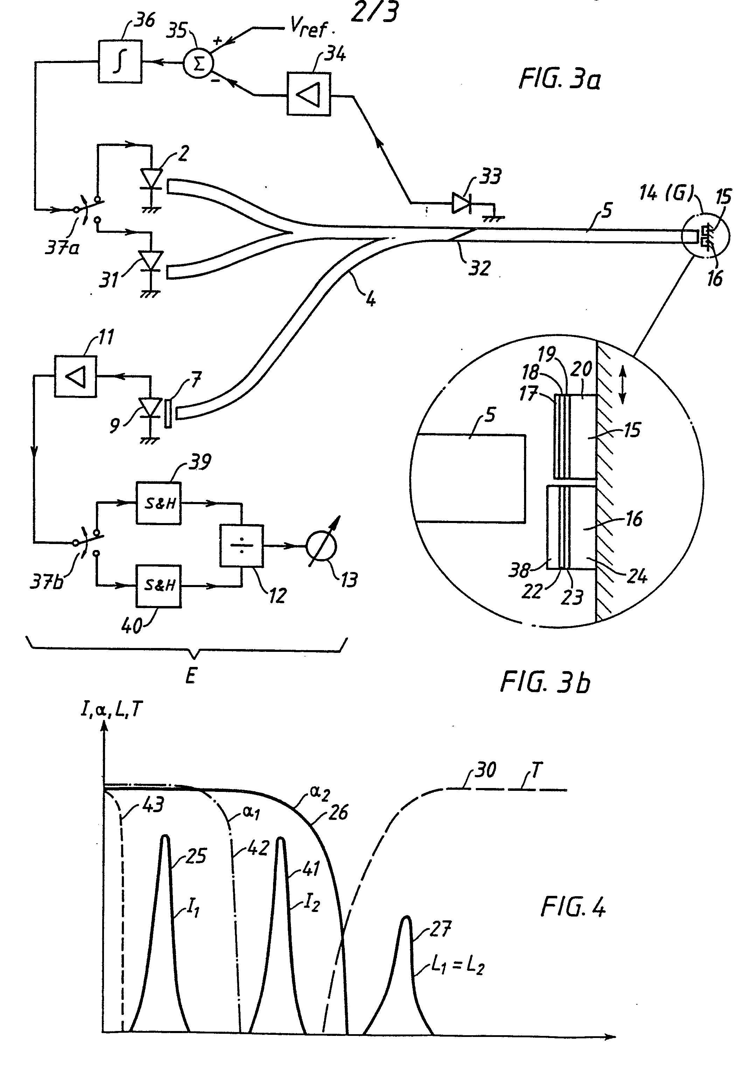

Fig. 3 zeigt, wie dieses und andere damit zusammenhängende Probleme dadurch gelöst werden, daß das Filter 6 und die zugehörige Fotodiode 8 fortgelassen werden und gleichzeitig eine weitere Leuchtdiode 31, eine weitere Fotodiode 33 und ein Sensorfilter 38 eingeführt werden. Die Arbeitsweise des Meßgerätes nach Figur 3 kann wie folgt beschrieben werden:

Durch den Schalter 37a werden abwechselnd die Leuchtdioden 2 und 31 in den Stabilisierungskreis geschaltet, in welchem ein Regler 36 und ein Differenzbilder 35 liegt, an den ein Bezugssignal $V_{ref}$ angeschlossen ist. Ein Teil des von den Leuchtdioden emittierten Lichtes wird mittels eines Strahlenteilers 32 aus der Faser 5 ausgekoppelt und von einem Fotodetektor 33 erfaßt, der über einen Verstärker 34 ebenfalls an den Differenzbilder 35 angeschlossen ist. Hierdurch wird sichergestellt, daß stets gleich große Lichtmengen (Lichtleistungen) von den Leuchtdioden 2 und 31 in die Faser 5 geleitet werden. Das vom Sensor 14 in die Faser geleitete Lumineszenzlicht wird von der als Detektor arbeitenden Fotodiode 9 erfaßt, wobei das Filter 7 die Aufgabe hat, in der Faseroptik reflektiertes Licht der Leuchtdioden 2 und 31 zu blockieren, was bedeutet, daß dieses Filter Licht mit Wellenlängen des Anregungslichtes (die Lumineszenz auslösenden Lichtes) aus dem durch Lumineszenz gewonnenem Licht, welches das Meßsignal darstellt, ausscheidet. Der Fotostrom der Fotodiode 9 wird in einem Verstärker 11 verstärkt und durch einen Schalter 37b, der mit dem Schalter 37a synchron arbeitet, abwechselnd den S&H-Gliedern 39,40 zugeführt. Diese sogenannten "sample- and hold-Glieder" sind Glieder, welche den einmal an ihrem Eingang vorhanden gewesenen Wert speichern und als Ausgangsgröße abgeben. Sobald eine neue Eingangsgröße erscheint, wird diese statt der bisherigen gespeichert und am Ausgang abgegeben. Aus den Ausgangssignalen der S&H-Glieder wird in dem Quotientenbilder 12 der Quotient gebildet, der wieder im Anzeigegerät 13 angezeigt wird. Fig. 3b zeigt ein Ausführungsbeispiel für den Aufbau des Sensors dieser neuen Meßanordnung. Das obere Sensorelement 15 ist mit dem Sensorelement 15 in Fig. 1b identisch, während bei dem unteren Sensorelement 16 die Schicht 21 in Fig. 1b durch eine Schicht 38 ersetzt ist, die ein anderes Absorptionsspektrum als die Schicht 21 hat. Wenn das Anregungslicht von der Leuchtdiode 2 herrührt, werden Elektronen nur in der Schicht 18 angeregt, so daß nur diese luminesziert, während beide Schichten 18 und 22 lumineszieren, wenn das Anregungslicht von der Leuchtdiode 31 herrührt. Daß dies der Fall ist, geht aus den Spektralverteilungskurven in Fig. 4 hervor, in der das Emissionsspektrum 25 der Leuchtdiode 2, das Emissionsspektrum 41 der Leuchtdiode 31, das Absorptionsspektrum 26 der Schichten 18 und 22, das Absorptionsspektrum 42 der Schicht 38, das Absorptionsspektrum 43 der Schicht 17, das Lumineszenzspektrum 27 der Schichten 18 und 22 und das Transmissionsspektrum 30 des Filters 7 dargestellt sind. Die Leuchtdiodenstabilisierung sorgt dafür, daß $\int I_1(\lambda) d\lambda = I_2(\lambda) d\lambda$, und die Spektren 25, 41 und 42 erhalten einen solchen Verlauf, daß temperaturabhängige Verschiebungen von 42 nicht 41

/6

im Sensor beeinflussen. Wie aus der Figur hervorgeht, beeinflussen temperaturabhängige Verschiebungen des Spektrums 27 nicht das Detektorsignal, so daß eine genaue Messung der räumlichen Verschiebung der Elemente 15 und 16 in vertikaler Richtung innerhalb großer Temperaturbereiche durchgeführt werden kann. Außerdem können die Lumineszenzschichten 18 und 22 einander genau angepaßt werden, was die Meßgenauigkeit und die Reproduzierbarkeit weiter erhöht.

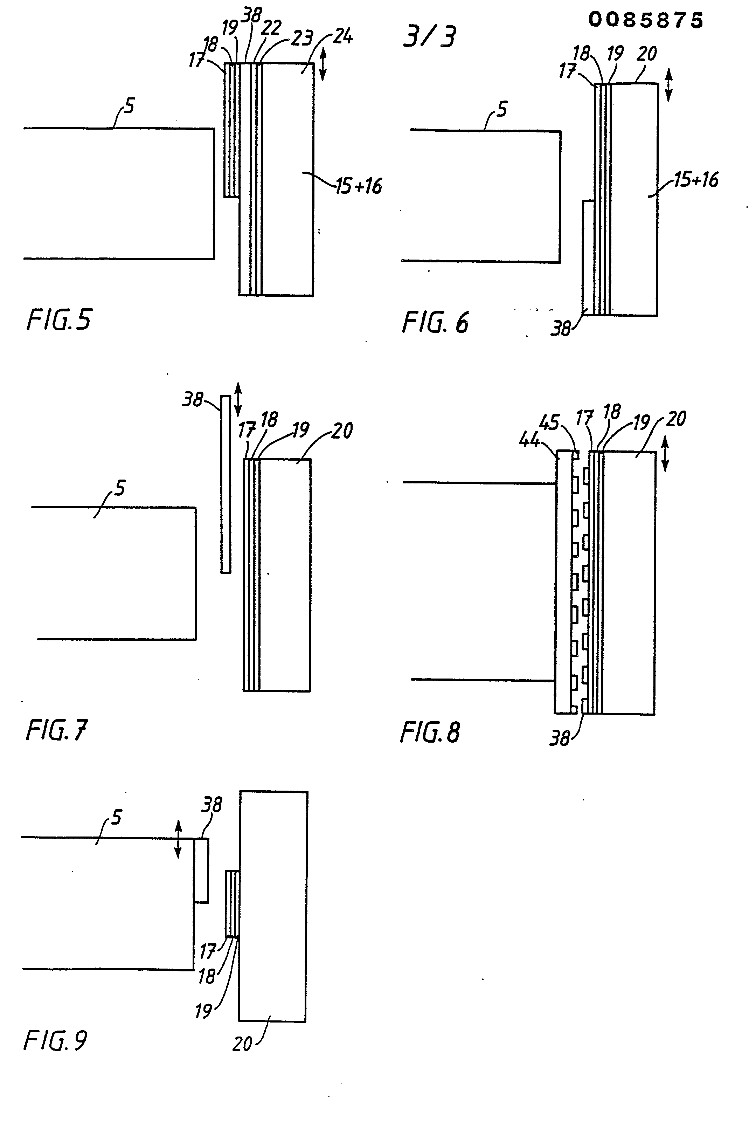

Mit der in Fig. 3a gezeigten Meßanordnung können verschiedene Sensorausführungen Bedeutung erlangen. So zeigt Figur 5 einen Sensor, bei dem die Elemente 15 und 16 auf ein und demselben Substrat integriert sind. Wenn z.B. mit Flüssigkeitsepitaxie gearbeitet wird, so werden auf dem Substrat 24 der Reihe nach die Schichten 23, 22, 38, 19, 18 und 17 aufgebracht. Danach werden die Schichten 17, 18 und 19 mit Hilfe eines sog. selektiven Ätzmittels räumlich partiell weggeätzt. In einer $Al_{1-x}Ga_xAs$-Struktur werden die Schichten durch verschiedene Werte für x bestimmt, wodurch man die gewünschten optischen Eigenschaften erhält und gleichzeitig die Voraussetzungen für eine selektive Ätzung geschaffen werden. Eine etwas einfachere Struktur zeigt Fig. 6, wobei die Schichten 17, 18 und 19 für die beiden Sensorelemente gemeinsam sind. Die Schicht 38 ist hier auf dem in der Figur oberen Sensorelement weggeätzt, wodurch dieses sowohl bei Anregungslicht von der Leuchtdiode 2 wie bei Anregungslicht von der Leuchtdiode 31 lumineziert. Das untere Sensorelement lumineziert dagegen nur bei Anregungslicht von der Leuchtdiode 31. Die Schicht 38 dient als ein für die Lichtquellen 2 und 31 selektives Filter und kann, wie in Fig. 7 gezeigt, von dem lumineszierenden Element gelöst werden, wobei das Filter 38 in vertikaler Richtung in Abhängigkeit der Meßgröße zwischen der Faser 5 und der lumineszierenden Schicht 18 verschoben wird.

Um die Auflösungsgenauigkeit des Sensors zu erhöhen, kann die Schicht 18 mit Hilfe von Lithographie so ausgeätzt wer-

17.1.1983
21 230 PE
0085875

- 7 -

den, daß ein Raster gemäß Fig. 8 entsteht. Dabei muß gleichzeitig ein Raster 45 auf einem transparenten Substrat 44 am Faserende vorhanden sein. Außer einer größeren Genauigkeit erhält man auch eine bessere Reproduzierbarkeit dadurch, daß die Modulation gleichzeitig über die ganze Sensorfläche verteilt erfolgt, wodurch örtliche Defekte keinen nennenswerten störenden Einfluß haben können.

In den Fällen, in denen der Wunsch besteht, daß das Filter 38 der Bewegung der Faser 5 folgt, kann ein Teil der lumineszierenden Schicht 18 entsprechend Fig. 9 weggeätzt werden. Hierdurch erhält man bessere Möglichkeiten zur Erzielung einer linearen Gebercharakteristik. Die vorstehend beschriebenen Anordnungen können im Rahmen des offenbarten allgemeinen Erfindungsgedankens in vielfacher Weise variiert werden.

Patentanwalt und Rechtsanwalt
Dr.-Ing. Dipl.-Ing. Joachim B o e c k e r          - 8 -          6 Frankfurt/Main 1, **0085875**
                                                    Rathenauplatz 2·8
                                                    Telefon: (0611) *282355
                                                    Telex: 4189066 itax d

                                                    17.1.1989
                                                    B/d 21 230 PE

Patentansprüche:
=================

1. Faseroptische Meßanordnung zum Messen physikalischer Größen, beispielsweise einer Lage, einer Geschwindigkeit, einer Beschleunigung, einer Kraft, eines Druckes, einer Dehnung oder einer Temperatur, mit mindestens einer optischen Faser (5) zum Leiten von Licht zwischen einer elektronischen Einheit (E) und einem Geber (G), wobei der Geber (G) mindestens ein lumineszierendes Element (15, 16, 18 usw.) enthält, dadurch gekennzeichnet, daß die zu messende physikalische Größe die Lage eines im Geber vorhandenen optischen Spektralfilters (38, 42), beispielsweise ein Absorptions- oder ein Interferenzfilter, relativ zu der optischen Faser (5) und/oder relativ zu dem genannten lumineszierenden Element bestimmt, daß das Spektralfilter (38) sich in größerem oder kleinerem Maße zwischen der Endfläche der optischen Faser (5) und mindestens einem der lumineszierenden Elemente (15, 16) befindet, daß der elektronische Teil (E) mindestens zwei Lichtquellen (2, 31) enthält, die über die optische Faser (5) die lumineszierenden Elemente (15, 16) beleuchten,und daß das Lichttransmissionsspektrum des Sepktralfilters (38) und das Lichtemissionsspektrum der Lichtquellen (2, 31) so gewählt werden, daß das genannte Spektralfilter das von der einen Lichtquelle erzeugte Licht in größerem Umfang durchläßt als das von der anderen Lichtquelle erzeugt Licht.

2. Meßanordnung nach Anspruch 1, dadurch gekennzeichnet, daß die beiden Lichtquellen (2, 31) zeit- oder frequenzmultiplexiert sind (37a), daß die von den beiden Lichtquellen in die Faser (5) eingekoppelten Lichtleistungen durch optische Rückkopplung in einem konstanten Verhältnis zueinander gehalten sind (32, 33, 34, 35, 36), daß das vom Geber erzeugte Lumineszenzlicht über die optische Faser (5) und ein optisches Filter (7) auf einen Fotodetektor (9) geleitet wird, daß das optische Filter (7) von den Lichtquellen (2, 31) stammendes reflektiertes Licht blockiert und daß das vom Fotodetektor (9) gelieferte Detektorsignal derart demultiplexiert wird, daß zwei Signale entstehen, welche der von den beiden Lichtquellen (2, 31) erzeugten Lumineszenz im Geber (14) entsprechen.

3. Faseroptische Meßanordnung nach Anspruch 2, dadurch gekennzeichnet, daß ein Glied (12) zur Quotientenbildung aus den demultiplexierten Detektorsignalen vorhanden ist.

4. Faseroptische Meßanordnung nach einem der vorhergehenden Ansprüche, dadurch gekennzeichnet, daß das optische Spektralfilter (38) ein Absorptionsfilter (42) ist, wobei eine Absorptionskante wellenlängenmäßig zwischen den Emissionsspektren (25, 41) der beiden Lichtquellen (2, 31) liegt.

5. Faseroptische Meßanordnung nach einem der vorhergehenden Ansprüche, dadurch gekennzeichnet, daß das lumineszierende Element eine möglichst gleiche Materialzusammensetzung über die ganze während des Messens beleuchtete Fläche hat.

6. Faseroptische Meßanordnung nach einem der vorhergehenden Ansprüche, dadurch gekennzeichnet, daß das lumineszierende Material (18, 22) in dem lumineszierenden Element (15, 16) aus einer Halbleiterschicht (18, 22) besteht und daß das umgebende Material (17, 19, 38, 23) aus Halbleiterschichten besteht, die so nahe wie möglich an die Gitterkonstante der lumineszierenden Schicht (18, 22) anschließen und die einen größeren Bandabstand als die lumineszierende Schicht (18, 22) haben.

7. Faseroptische Meßanordnung nach Anspruch 6, dadurch gekennzeichnet, daß die genannten Halbleiterschichten (17, 18, 19, 38, 22, 23) aus $Ga_{1-x}Al_xAs$, $In_xGa_{1-x}As_yP_{1-y}$ und/oder aus anderen ternären und quarternären III-V-Halbleitermaterialien bestehen, wobei x und y so gewählt werden, daß sie von Schicht zu Schicht zur Erzielung der gewünschten Bandabstandsbeziehungen variieren, und daß die lumines-

- 10 -

zierenden Halbleiterschichten (18, 22) derart dotiert sind,
z.B. mit Si, Mg oder Ge, daß man das gewünschte Lumineszenzspektrum erhält.

8. Faseroptische Meßanordnung nach Anspruch 7, dadurch gekennzeichnet, daß das optische Spektralfilter (38) aus einer
der genannten Halbleiterschichten (38) besteht, wobei diese
Schicht durch selektive Ätzung von einer oder mehreren Teilflächen der darunterliegenden Halbleiterschicht (17) entfernt wurde.

9. Faseroptische Meßanordnung nach Anspruch 8, dadurch gekennzeichnet, daß die genannten Teilflächen ein Raster bilden (Fig. 8), das sich relativ zu einem anderen Raster (45)
bewegen kann.

T 1.1983
21 230 P

0085875

FIG.1a

FIG.1b

$I, \alpha, L, T$

FIG. 2

17.1.1933
21 230 P

0085875

2/3

FIG. 3a

FIG. 3b

FIG. 4

17-1, 1983
21 230 P

0085875

FIG.5

FIG. 6

FIG. 7

FIG.8

FIG. 9